# EUROPEAN PATENT SPECIFICATION

(11) **EP 2 741 141 B1**
(45) Date of publication and mention of the grant of the patent: **04.05.2016**
(21) Application number: 12196212.0
(22) Date of filing: 10.12.2012
(51) Int. Cl.: G03B 35/18, G03B 21/60, G03B 35/16, H04N 13/04, G02B 27/22

(54) **Autostereoscopic projection screen**
Autostereoskopischer Projektionsbildschirm
Écran de projection autostéréoscopique

(43) Date of publication of application: 11.06.2014
(73) Proprietor: Airbus Operations GmbH, 21129 Hamburg (DE)
(72) Inventor: Mahn, Stefan, 21614 Buxtehude (DE); Riedel, Christian, 21640 Bliedersdorf (DE); Fischer, Wolfgang, 21635 Jork (DE)
(74) Representative: Uexküll & Stolberg

(56) References cited:
- WO-A2-2012/054231
- GB-A- 392 161
- GB-A- 2 115 178
- JP-A- 2001 108 939
- SU-A1- 980 049
- US-A1- 2010 253 915

## Description

The following invention relates to an autostereoscopic projection screen, a method for autostereoscopic projection and a system for autostereoscopic projection.

Adding three-dimensional depth perception to images displayed on a planar display or screen has been a long-term goal in the entertainment industry. The basic principle behind all approaches to this problem is the same: a viewer can only perceive a third dimension if he sees an object from slightly different angles. In other words, the viewer's left and right eye have to see differing images such that the brain can reconstruct depth information.

In recent years a wide variety of systems has been developed that aim on providing a viewer with different images on the left eye and the right eye. The most common systems display a modified image or a modified sequence of images on a conventional plane screen or display. A viewer has to wear a special pair of glasses which are adapted such that a viewer sees different images with his left eye and his right eye. If multiple viewers would like to watch an image on the same screen each user requires a pair of glasses. Systems that rely on special glasses are obviously disadvantageous for a variety of reasons: a reduced comfort of the viewer as he needs to wear glasses, poor communication among multiple users, commonly screen/display and glasses form a closed system i.e. the glasses cannot by used on multiple systems, to name just a few of the disadvantages.

A second category of systems employs modified displays to allow a three-dimensional perception of depth without any glasses. These systems are commonly referred to as autostereoscopic systems. Today, a wide variety of autostereoscopic displays is available that are either based on the principle of the parallax barrier or the principle of lenticular lenses. Most of the commercially available autostereoscopic displays are based on one of two principles or a combination.

A parallax barrier system comprises a normal display in front of which a layer of slits is superimposed such that a viewer at a viewing distance and under a given viewing angle can view some of the pixels of the display only with the left eye and others only with the right eye. If the image displayed on the display is adapted accordingly, the left eye and the right eye view different images and a perception of depth can be generated.

In lenticular lens systems a lenticular lens array is superimposed in front of a conventional display. The lenses are formed such that a viewer in a viewing distance views different pixels with his left eye and his right eye. If once again the image displayed on the display is adapted accordingly, a perception of three-dimensional depth can be generated.

However, any autostereoscopic system known as of today requires an additional layer between the display and the viewer. Therefore, none of the systems available today are suitable for a projection screen using front projection i.e. a projection screen onto which an image is projected from the same side a viewer is seeing. However, especially in settings in which weight is a critical issue, a system comprising of a projection screen and a modern projector may be beneficial. In addition, a projection system allows the separation of the image source from the screen and thus different ways of integration and mounting positions compared to a display. Projection systems are also generally beneficial for large screen diameters.

An example for such a system may be the in-flight entertainment (IFE) system of an aircraft. Current IFE systems comprise many displays distributed all over the aircraft's cabin that add considerably to the aircraft's overall weight thereby reducing the aircraft's payload and increasing fuel consumption.

Several solutions have been proposed to reduce the weight of the in-flight entertainments systems. In German patent application no. 10 2011 077 421 a method is described wherein a single autostereoscopic display can be used to display different images for multiple passengers in an aircraft. Here, only one screen is required for multiple passengers thereby considerably reducing the overall weight of the IFE system without taking away the option of providing individual content to each passenger.

A second approach disclosed in U.S. 2010/0201950 A1 considers replacing heavy overhead displays with lightweight combinations of projectors and projection screens. This further reduces the weight of the IFE system at the cost of removing the option to provide individual content for each passenger.

From the prior art so-called micromirror arrays also referred to as digital micromirror devices are known. These semiconductors comprise several hundred thousands of microscopic mirrors or micromirrors that are commonly arranged on a rectangular or regular grid. Each of the micromirrors can be tilted independently of the other micromirrors in the array.

In light of the above it is, therefore, an objective of the present invention to provide a projection screen allowing for an autostereoscopic generation of three-dimensional depth perception in images.

In one aspect of the invention the problem is solved by an autostereoscopic projection screen comprising a control means and a projection area, the projection area comprises micromirrors. The control means is adapted to adjust the orientation of the micromirrors such that the micromirrors can reflect light emitted by an image source into a plurality of directions creating an image in each direction at a viewing distance such that each image can only be seen by one eye of a viewer located in said corresponding direction at said viewing distance. Two of the images are created at a first viewing distance and spaced apart such that a viewer in the first viewing distance can see one of the two images with a first eye only and the other of the two images with a second eye only, wherein the viewer has the impression of seeing the two images simultaneously.

Thus, the present invention provides a solution for said problem by providing an autostereoscopic projection screen having a projection area comprising micromirrors. For adjusting or altering the orientation of the micromirrors the autostereoscopic projection means comprises a control means. The control means could be in the form of a micro-controller or any another suitable electronic device. Depending on the actual embodiment of the projection screen, the control means can control the orientation of each micromirror individually, of groups, subsets or sets of micromirrors together or a combination of the latter.

The orientation of the micromirrors of the projection screen is controlled by the control means and the control means is able to adjust or alter the orientation of the micromirrors. In particular, the control means has to be adapted to initiate any adjustment of the orientation of one or several micromirrors. To improve the intelligibility of the description of the present invention, it has, however, been refrained from elaborating that the control means has to be adapted to adjust the orientation of a micromirror whenever it is referred to the orientation of a micromirror. Thus, whenever the orientation of a micromirror or an altering of the orientation of a micromirror is described, this incorporates that the control means is adapted to orientate or alter the orientation of the respective micromirror in the described manner. The above also applies whenever it is only referred to the direction in which light is reflected by a micromirror. This shall be read as if the control means is adapted to adjust the orientation of the micromirror such that it can reflect light emitted by an image source into the respective direction.

The objective of the projection screen is to give a viewer in a first viewing distance the impression that he simultaneously views two different images, one with a first eye and the other with a second eye. It is, however, important to note, that the images can but do not have to be created at the same time or simultaneously. The two images can also be created in an alternating fashion as long as the viewer has the impression of viewing the two images at the same time. In other words, if the two images are shown in an alternating fashion the repetition rate of the each image has to be higher than the rate at which the human brain will not notice any flicker or can distinguish between subsequent images.

In either way, the orientation of the micromirrors has to be adjusted by the control means to reflect light emitted by an image source into a plurality of directions. A direction could, for example, refer to a common angle of reflection or a reflection towards a common focal point of all micromirrors i.e. all micromirrors reflect the incident light of the image source under different angles. The term "direction" implies merely that the reflection angle of some micromirrors is correlated such that an image is generated in a viewing distance.

Light emitted by the image source has to be reflected at least into two directions such that the two images to be viewed by a viewer are created in the first viewing distance. Each of the images can only be viewed by one eye of a viewer i.e. any two images do not overlap in a viewing distance but are separated or spaced apart from one another.

The two images to be seen by a viewer in the first viewing distance can either be created by the same micromirrors or by different micromirrors. If the images are created by different micromirrors i.e. by two distinct subsets of micromirrors of the projection screen, a first subset of micromirrors reflects light into the first direction and a second subset reflects light into the second direction. However, this does not necessarily need to be at the same time i.e. it is also possible that the first subset is only illuminated during a first timeframe and the second subset is only illuminated during a second timeframe.

Alternatively, the two images can be created by the same micromirrors. One of the images is necessarily created in the first timeframe and the other image is created in the second timeframe. Hence, the orientation of the micromirrors creating the two images has to be altered between the first and the second timeframe. It is, of course, also conceivable that some micromirrors create one of the two images only while others contribute to both images.

The present invention provides an advantageous projection screen for projecting an autostereoscopic image. A correctly located viewer at the first viewing distance can perceive three-dimensional depth in an image though he is looking onto a flat or planar projection screen. The use of micromirrors to control the direction and the viewing distance in which the images are created is especially advantageous as the system can be easily adapted for different positions of the viewer.

Projection screens according to the present invention can advantageously be used as a part of a projection system. Such systems provide considerable advantages over conventional displays in the space requirements, overall weight and mounting flexibility.

The autostereoscopic projection screen according to the invention is further advantageous as the orientation of the micromirrors can be adjusted to follow the position of a viewer thereby creating an optimal viewing experience regardless of the exact position of the viewer with respect to the projection screen. An autostereoscopic projection screen according to the above invention can, of course, advantageously also be used to display movies.

In a preferred embodiment the control means is adapted to adjust the orientation of the micromirrors such that a plurality of images is created at the first viewing distance, wherein for each first image created at the first viewing distance a corresponding second image is created at the first viewing distance such that a viewer at the first viewing distance can see the first image with a first eye only and the second image with a second eye only, wherein the viewer has the impression of seeing the two images simultaneously.

In other words, more than two images are created at the first viewing distance. A viewer located at that viewing distance can view different first and second images. This preferred embodiment provides an option for a viewer to view the objects displayed by the images from different angles i.e. the viewer can view an object from a different angle by shifting his viewing position. Alternatively, if at least four images are created, two viewers that are located at the same viewing distance can simultaneously be provided with an impression of viewing two images simultaneously.

Creating a plurality of images at the same viewing distance does not necessarily require that any two directly adjacent images are spaced apart such that they can be seen by the different eyes of a viewer. One or more images created at the first viewing distance may be arranged between two images that can be viewed with the first and second eye of the viewer.

In another preferred embodiment two images are created at a second viewing distance and spaced apart such that a viewer in the second viewing distance can see one of the images with a first eye only and the other of the two images with a second eye only, wherein the viewer has the impression of seeing the images simultaneously.

Additionally to the at least two images created at a first viewing distance this preferred embodiment comprises two further images created at a second viewing distance. In addition to the one or more viewers located at a first viewing distance a further viewer located at the second viewing distance can also be provided with a projection of an autostereoscopic image. In other words, multiple viewers that are e.g. seated next to each other or in different rows behind one another can advantageously be supplied with images from the same screen.

It is further preferred that the micromirrors are arranged on a rectilinear grid, such that each micromirror can be identified by a row number and a column number. A rectilinear or regular grid is a grid whose axes are perpendicular or orthogonal to one another and whose grid points or cells can be indexed by integers. On a regular grid the grid points are spaced equally apart along both axes. Every micromirror that is arranged on a rectilinear or regular grid can be identified by a row number and a column number. It is, however, not necessary that every grid point of the grid needs to be occupied by a micromirror. In an exemplary embodiment only those grid points that can be identified by an odd row number and an odd column number and those grid points that can be identified by an even row number and an even column number are occupied with micromirrors. A row shall refer to a horizontal line of micromirrors i.e. a row extends approximately parallel to an axis passing through the first and the second eye of correctly placed viewer.

In a preferred embodiment the micromirrors are arranged in a plurality of subsets and each of the plurality of images is created by one subset of micromirrors.

In other words, the problem can be solved by an autostereoscopic projection screen having a projection area comprising micromirrors. The micromirrors are arranged in a plurality of subsets. The orientation of each subset of micromirrors can be adjusted by a control means. The control means is adapted to adjust the orientation of the micromirrors of each subset such they can reflect light emitted by an image source into one of a plurality of directions. Thereby, one of a plurality of images is created in a viewing distance, such that the image can only be seen by one eye of a viewer located in said direction at the viewing distance. Two images are spaced apart such that a viewer in the viewing distance has the impression that he can simultaneously see one of the two images with a first eye and the other of the two images with the second eye.

Thus, the preferred embodiment provides a solution for said problem by providing an autostereoscopic projection screen having a projection area comprising micromirrors. These micromirrors are arranged in a plurality of subsets. Arranging mirrors in subsets does not necessarily refer to arranging all these micromirrors adjacent to one another. Instead, the micromirrors of a subset are commonly spread all over the projection screen. However, in some embodiments two or more micromirrors of the same subset may be arranged adjacent to one another.

The orientation of each subset of micromirrors can be adjusted by a control means. Here, the term orientation refers to an alignment of mirrors with respect to a common projection plane. However, adjusting the orientation of a subset of micromirrors does not necessarily imply that all micromirrors are arranged under the same angle with respect to the common projection plane. Instead, this merely refers to adjusting all micromirrors of a subset in a correlated manner.

The control means allows changing the orientation of each subset of micromirrors independently of the other subsets of micromirrors. This does, however, not exclude that the orientation of two subsets can be adjusted in a correlated manner.

The control means is adapted to adjust the orientation of the micromirrors of each subset such that they reflect light emitted by the image source into one of a plurality of directions.

In an exemplary embodiment, every subset of micromirrors reflects light emitted by an image source. Alternatively, the images source may comprises several projection units that are distinct physical entities but are not necessarily separate from one another. An image source is only defined as a source of light that illuminates the micromirrors of the autostereoscopic projection screen such that the light reflected by the micromirrors creates a plurality of images in a viewing distance. The image source can in particular be formed by a single projector having a plurality of pixels wherein each subset of micromirrors is illuminated by a subset of the pixels.

Light reflected by a subset of micromirrors creates one of a plurality of images in a viewing distance. Said image can only be seen by one eye of the viewer located in said direction at the viewing distance. In other words, a viewer looking onto the screen from said direction can only perceive the image created by one subset of micromirrors with one eye.

In an exemplary embodiment, each of the plurality of images is created by one subset of micromirrors only. Thus, in the exemplary embodiment the numbers of images created from the projection screen corresponds to the number of subsets of micromirrors.

Two images of the plurality of images created in a viewing distance are spaced apart such that a viewer in a viewing distance has the impression the he can simultaneously see one of the two images with the first eye and the other of the two images with the second eye. In other words, for each image there has to be at least one other image such that the viewer can view one image with the first eye and the other image with the second eye. The two images do not necessarily have to be adjacent images i.e. one or more further images may be projected between the two images viewed with the first and the second eye.

The proposed preferred embodiment of an autostereoscopic projection screen provides an advantageous solution for the above problem. The subsets of micromirrors can be oriented to project different images for each eye of a viewer. A correctly located viewer can perceive three-dimensional depth in an image though he is looking onto a flat or planar projection screen.

In a preferred embodiment a plurality of the micromirrors is arranged in clusters, each cluster comprising at least two micromirrors. All micromirrors in a cluster belong to the same subset and for each micromirror in a cluster there is another micromirror in the same cluster that can be identified by an adjacent row number and the same column number or by an adjacent column number and the same row number. In this preferred embodiment some of the micromirrors and even more preferred all of the micromirrors are arranged in clusters. A cluster is defined as a group of adjacent micromirrors that belong to the same subset. Arranging a micromirror in a cluster implies that at least one of the micromirrors next neighbour i.e. a micromirror having the same row number and a directly adjacent column number or a micromirror having the same column number and a directly adjacent row number belong to the same subset.

In general, the image source and the projection screen have to be carefully aligned such that each subset of micromirrors is only illuminated by selected pixels of the image source. If a subset of micromirrors is illuminated by light that was intended to illuminate micromirrors of another subset, a viewer may see a distorted image. The degree of distortion largely depends on the relative area of the micromirrors of a subset that is falsely illuminated. The more micromirrors are arranged in a cluster, the smaller is the impact of the same misalignment. However, this is bought at the cost of a reduced image resolution.

In an exemplary setting where the image source and/or the projection screen according to the invention are subject to vibrations, e.g. in an aircraft, it is preferred to employ an image stabilization method such as the one disclosed in DE 10 2007 027 421 A1 to avoid accidental misalignment due to vibration.

In another preferred embodiment all micromirrors that can be identified by the same column number are arranged in the same cluster whereby an image projection is achieved that is insensitive to vibrations and displacements of the arrangement of image source and projection screen in the direction of the columns. This embodiment is advantageous if a viewer's first eye and second eye are aligned along an axis parallel to the direction of the rows of micromirrors. In this case, a misalignment of the image source in a direction parallel to the column extension has only very little influence on the image quality.

In an exemplary embodiment, micromirrors that can be identified by the same row number and adjacent column numbers belong to different subsets or clusters. In other words, all micromirrors that are arranged on a given row belong to a different subset of micromirrors than their next neighbours. This embodiment is preferred as a high image resolution along an axis parallel to the rows of the screen can be achieved.

It is further conceivable that each micromirror is arranged in the same subset or cluster as at least one micromirror that can be identified by the same row number and an adjacent column number. Each micromirror has at least one micromirror that is arranged on the same row, is a next neighbour and belongs to the same subset. In an exemplary embodiment, more than two adjacent micromirrors that have the same row number are grouped together and belong to the same subset. Arranging two or more adjacent micromirrors into the same subset, which can also be referred to as clustering, is advantageous, as slight misalignments of the image source along an axis parallel to the rows has only a limited impact on the image quality. Furthermore, the maximum extension or size of the micromirrors is limited. For large projection screens multiple micromirrors have to be clustered to provide a sufficiently large projection area for each pixel of the image.

In another exemplary embodiment each micromirror is arranged in the same subset of micromirrors as at least one micromirror that can be identified by the same column number and an adjacent row number. Here, at least two micromirrors that are arranged in the same column but in different neighbouring rows belong to the same subset and cluster. In an exemplary embodiment, more than two adjacent micromirrors along a column belong to the same subset. Clustering the micromirrors in the direction of the columns is advantageous, as a slight misalignment of the image source in a direction parallel to the extension direction of the columns has only a limited impact on the image quality.

In exemplary embodiments the micromirrors are arranged in two subsets or in nine subsets. Arranging the micromirrors in two or nine subsets allows using the available 3D content and signal processing for current stereoscopic displays and projection systems.

In a preferred embodiment all of the images of the plurality of images are created simultaneously i.e. all micromirrors are arranged in subsets. Each image is created by one subset of micromirrors and the viewer does not only have the impression of viewing the images simultaneously.

In an alternative preferred embodiment the control means is adapted to alter the orientation of the micromirrors in rapid succession such that the two images, that are created at the first viewing distance and spaced apart such that a viewer in the first viewing distance can see one of the images with a first eye and a second of the two images with a second eye only, wherein the viewer has the impression of seeing the two images simultaneously, are not created simultaneously.

The control means is preferably adapted to alter the orientation of the micromirrors in rapid succession such that more than two images are created at the first viewing distance, wherein for each first image created at the first viewing distance a corresponding second image is created at the first viewing distance such that a viewer at the first viewing distance can see the first image with a first eye only and the second image with a second eye only, wherein the viewer has the impression of seeing the two images simultaneously, and wherein each first image and the corresponding second image are not created simultaneously.

Preferably, the light emitted by an image source is only reflected into one of the plurality of directions at a time. In other words, each image is created by all illuminated micromirrors and the orientation of all micromirrors is changed simultaneously to generate successive images. Employing all micromirrors to create each image advantageously creates high resolution images. This embodiment is especially advantageous as the image quality is largely governed by a correct synchronization of the image source with the projection screen in the time domain i.e. the images displayed by the image source have to be synchronized with the orientation of the micromirrors. Such can be achieved by electronic means. A misalignment of the image source with respect to the projection screen has, however, only a very limited impact on the image quality. Therefore, the present preferred embodiment can advantageously be used in surroundings that are affected by frequent vibrations like aircraft or trains.

In another aspect the problem is solved by a method for autostereoscopic projection comprising the following steps:
- providing an autostereoscopic projection screen according to the present invention,
- providing an image source,
- emitting light using the image source to illuminate the micromirrors and
- using the control means to adjust the orientation of the micromirrors, such that the light emitted by the image source is reflected into a plurality of directions creating an image in each direction at a viewing distance, such that each image can only be seen by one eye of a viewer in said corresponding direction at said viewing distance,
   wherein two of the images are created at a first viewing distance and spaced apart such that a viewer in the first viewing distance can see one of the two images with a first eye only and the other of the two images with a second eye only, wherein the viewer has the impression of seeing the two images simultaneously.

It is further preferred that the step of using the control means to adjust the orientation of the micromirrors comprises the repeated steps of
- using the control means to alter the orientation of the micromirrors such that light emitted by the image source is reflected into a first direction, thereby creating a first image of the two images at the first viewing distance and
- using the control means to alter the orientation of the micromirrors such that light emitted by the image source is reflected into a second direction, thereby creating a second image of the two images at the first viewing distance.

Said method is advantageous for the same reason as the above-mentioned autostereoscopic projection screen.

In a third aspect of the invention a system for displaying autostereoscopic images is provided. The system comprises an autostereoscopic projection system screen according to any of the above preferred embodiments and an image source for emitting light to illuminate the micromirrors.

Said system is advantageous for the same reasons that have already been stated above for the claimed autostereoscopic projection screen and the method for autostereoscopic projection.

In a preferred embodiment of the system the image source is adapted to illuminate the micromirrors only when the orientation of the micromirrors is not altered. In other words, the image source is turned off whenever the orientation of the micromirrors is altered. Turning the image source off while altering the orientation of the micromirrors advantageously prevents that a viewer perceives blurred images.

Five preferred embodiments of the present invention will now be described, by way of example only, with reference to the accompanying drawings of which
- Fig. 1: is a schematic representation of the principle of the present invention,
- Fig. 2: is a schematic drawing of a first exemplary embodiment of the present invention,
- Fig. 3: is a schematic drawing of a second exemplary embodiment of the present invention,
- Fig. 4: is a schematic drawing of a third exemplary embodiment of the present invention,
- Fig. 5: is a schematic drawing of a first exemplary embodiment of a system for autostereoscopic projection
- Fig. 6a: is a schematic drawing of a second exemplary embodiment of a system for autostereoscopic projection and
- Fig. 6b: is another schematic drawing of the second exemplary embodiment of a system for autostereoscopic projection.

The Figures show only schematic representations of exemplary embodiments of the present invention and have not been drawn to scale.

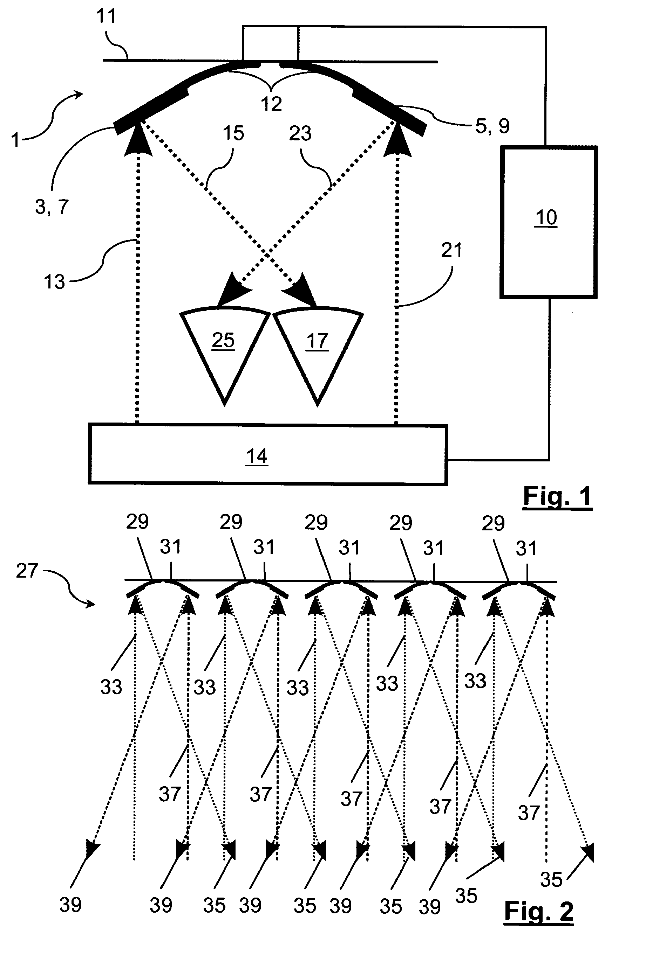

In Fig. 1 the general principle of an autostereoscopic projection screen 1 according to one preferred embodiment of the present invention is outlined. Being merely a schematic representation, the projection screen 1 comprises only two micromirrors 3, 5 forming a first and a second subset 7, 9. The orientation of the micromirrors 3, 5 can be adjusted independently of one another by a control means 10. In this schematic representation the term orientation refers to a tilt of the micromirrors 3, 5 with respect to a common projection plane 11.

The micromirrors 3, 5 are attached to the projection plane 11 by a thin connection layer 12. The micromirrors 3, 5 of the embodiment shown in Fig. 1 can only be tilted in a direction away from the projection plane 11 about the respective connection layer 12 i.e. micromirror 3 is tilted towards micromirror 5 and vice versa. Tilting the micromirrors 3, 5 is, in other words, restricted to one direction. This limits the direction into which each subset 7, 9 of micromirrors 3, 5 may reflect light.

In Fig. 1 the orientation of micromirror 3 of the first subset 5 has been adjusted by the control means such that light 13 emitted by an image source 14 is reflected into a first direction 15. The reflected light creates a first image in a viewing distance. Said first image can only be seen by with a first eye 17 of a viewer in the viewing distance.

The light 21 emitted by the image source illuminates micromirror 5 belonging to the second subset 9. The orientation of the micromirror 5 of the second subset 9 has been adjusted to reflect the light 21 into a second direction 23 such that the reflected light creates a second image that can only be seen with a second eye 25 of a viewer.

The images created by the first and second subset 7, 9 of micromirrors do not overlap at the viewing distance and are spaced apart such that a viewer can view the first image with one eye 17 and the second image with another eye 25. Hence, the projection screen 1 according to the present invention allows for a front projection of two different images into the eyes of a viewer without requiring any kind of glasses or other headgear. Combined with a modern projector it offers a lightweight solution for the generation of three-dimensional depth perception in images projected on a plane surface.

In Fig. 1 it is well conceivable that the orientation of micromirror 3 of the first subset 7 can be adjusted differently using the control means 10 e.g. the light 13 could be reflected into a direction such that the image can be seen with the second eye 25 only. However, in that case the control means 10 would have adjusted the orientation of the second subset 9 of micromirrors such that the light 21 is reflected in a direction such that the image created by it can be seen with the first eye 17 only.

Fig. 2 shows part of a row 27 of micromirrors 29, 31 of a first exemplary embodiment of a projection screen according to the present invention. Only those features of this embodiment will be elaborated in more detail that differ from the features in Fig. 1. The micromirrors 29, 31 are arranged on a regular grid. Hence, every micromirror corresponds to another column. In other words, all micromirrors 29, 31 can be identified by the same row number but by a different column number. The micromirrors 29, 31 are arranged in an alternating manner in two different subsets i.e. adjacent micromirrors 29, 31 on the same row belong to different subsets. The first subset comprises all micromirrors 29; the second subset comprises all micromirrors 31.

The orientation of the micromirrors 29 of the first subset has been adjusted by a control means (not shown) such that light 33 emitted by an image source (not shown) and illuminating the first subset of micromirrors 29 is reflected into a first direction 35. The reflected light creates a first image in a viewing distance from the screen that a viewer can see with one eye only.

The control means has been used to adjust the orientation of the second subset of micromirrors 31 into a different position. Light 37 emitted by image source also illuminates the second subset of micromirrors 31 but is reflected into another direction 39. A viewer located in the viewing distance at this direction 39 can view the image created by the light reflected by the second subset of micromirrors 31 with one eye only.

The projection screen of the second exemplary embodiment is especially advantageous as it allows for a high spatial resolution in the direction of the row 27. It should be noted that Fig. 2 could as well be showing a column of micromirrors.

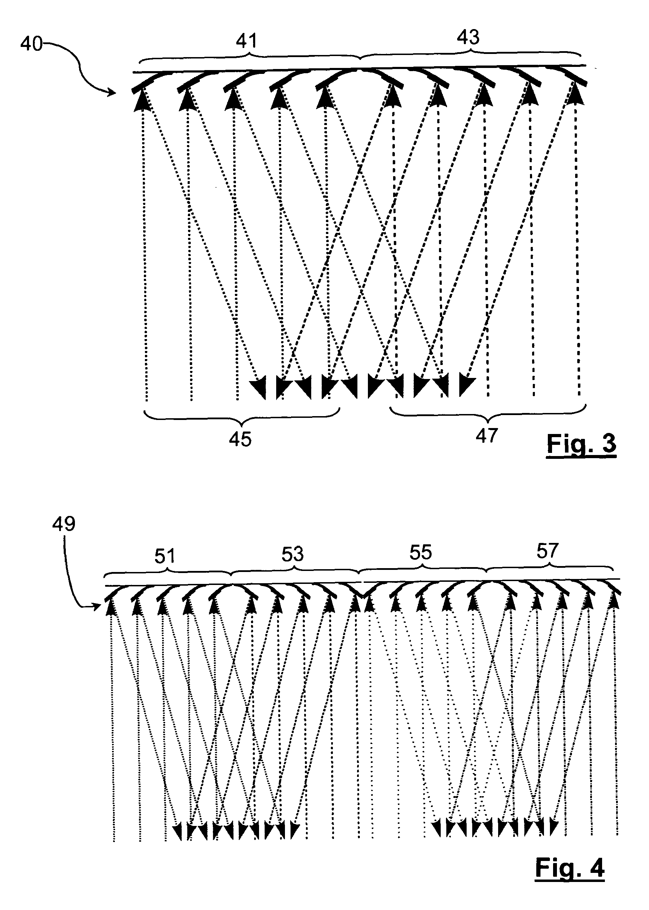

Fig. 3 shows part of a row 40 of micromirrors 41, 43 of a second embodiment of a projection screen according to the present invention. As in Fig. 2, the micromirrors are arranged on a regular grid. The micromirrors 41, 43 are arranged in two subsets. A first group of micromirrors 41 belongs to a first subset; a second group of micromirrors 43 belongs to a second subset of micromirrors. In contrast to the first embodiment, each micromirror 41, 43 has at least one neighbouring micromirror 41, 43 that belongs to the same subset. The subsets of micromirrors are formed by clusters 41, 43 of micromirrors 41, 43. In the exemplary embodiment in Fig. 3 at least five consecutive micromirrors 41, 43 along each row 40 belong to the same subset. The light 45, 47 of an image source illuminates the first subset of micromirrors 41 and the second subset of micromirrors 43.

The second exemplary embodiment of the present invention is advantageous, as the image quality of the images created by the projection screen is less affected by a misalignment of the image source and the projection screen in a direction parallel to the row 40. Even if the image source emitting the light 45, 47 would be shifted e.g. by one micromirror along the row 40 towards the second set of micromirrors 43, four out of five micromirrors would still be illuminated correctly.

Along the columns that are perpendicular to the row 40 the micromirrors could both be arranged in subsets as in the first embodiment or as in the second embodiment. However, it is also conceivable that all micromirrors in one column belong to the same subset i.e. all micromirrors that can be identified by the same column number as one of the micromirrors 41 belong to the first subset and all micromirrors that can be identified by the same column number as one of the micromirrors 43 belong to the second subset.

It should further be noted that the number of micromirrors in each cluster does not have to be constant along the row 40. It is, for example, possible to have smaller or no clusters of micromirrors in the centre of a projection screen and larger clusters of multiple micromirrors at the edges of the projection screen.

Fig. 4 shows a part of a row 49 of a third exemplary embodiment of a projection screen according to the present invention. The micromirrors 51, 53, 55, 57 are grouped in clusters 51, 53, 55, 57 i.e. each micromirror 51, 53, 55, 57 has at least one adjacent micromirror 51, 53, 55, 57 in the same row 49 that belongs to the same subset. However, in contrast to the previous embodiments the micromirrors 51, 53, 55, 57 are arranged in at least four subsets. Each subset's orientation has been aligned by a control means (not shown) such that it reflects light emitted by the image source into one of four directions thereby creating at least four different images. Each image can only be seen by one eye of a viewer in the viewing distance. Each of the four images is spaced apart from at least one of the other three images such that a viewer in the viewing distance can see one image with a first eye and a second image with a second eye. Hence, a viewer can only see two of the four projected images simultaneously.

A projection screen according to the third exemplary embodiment is advantageous for various reasons. In an exemplary setting the projection screen can be used to display stereoscopic images for two viewers at the same time i.e. a first viewer sees the images created by a first and a second subset of micromirrors and a second viewer sees the images created by a third and a fourth subset of images. Thereby, a single projection screen and a single projector can be used to show different content to two viewers.

In another exemplary setting a projection screen according to the third exemplary embodiment can be used to project multiple views of the same objects under slightly altered angles such that a viewer can view the objects depicted in the projected images under different angles if the projection screen is viewed from different directions. Alternatively, such a setting can be used to allow multiple users to view the same images and reduce the necessity for a viewer to be located in an exact position to view one image with each eye.

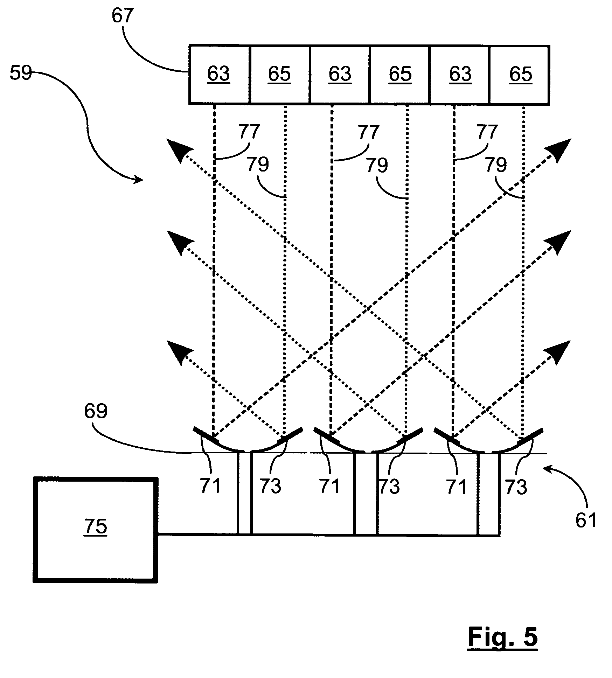

Fig. 5 shows an exemplary embodiment of a system 59 for autostereoscopic projection according to the present invention. The system comprises an autostereoscopic projection screen 61 according to the first exemplary embodiment and an image source 67 comprising two groups of pixels 63, 65.

Only one row 69 of micromirrors 71, 73 of the autostereoscopic projection screen 61 is shown in Fig. 5. The micromirrors 71, 73 are arranged in a first subset of micromirrors 71 and a second subset of micromirrors 73. A control means 75 has been adapted to adjust the orientation of the micromirrors 71, 73.

Each group of pixels 63, 65 emits light 77, 79 that illuminates one subset of micromirrors 71, 73 only i.e. a first group of pixels 63 emits light illuminating only the first subset of micromirrors 71 and a second group of pixels 65 emits light illuminating only the second subset of micromirrors 73. In turn, the first subset of micromirrors 71 is illuminated by the first group of pixels 63 only and the second subset of micromirrors 73 is illuminated by the group of pixels 65 only.

The exemplary embodiment of the system 59 for autostereoscopic projection is advantageous for the same reasons as the different embodiments of an autostereoscopic projection screen according to the present invention.

In all of the above exemplary embodiments the orientation of the micromirrors does not need to be fixed. It is, for example, advantageously possible to use a system for tracking the eye position of a viewer and adjust the orientation of the micromirrors using the control means such that a first subset of micromirrors always reflects the light emitted by the image source towards the viewers first eye and a second subset of micromirrors always reflects the light emitted by the image source towards the viewers second eye.

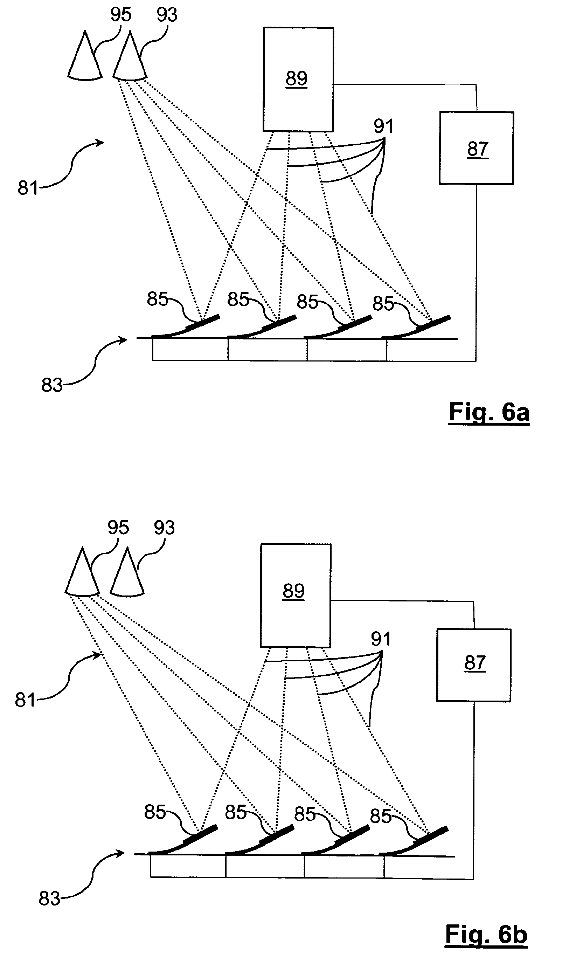

Finally, Figs. 6a and 6b show a second exemplary embodiment of a system 81 for autostereoscopic projection according to an aspect of the present invention. The system comprises an exemplary embodiment of an autostereoscopic projection screen 83 according to another aspect of the present invention. The projection screen 83 comprises a plurality of micromirrors 85. The orientation of the micromirrors 85 can be controlled via a control means 87. The system further comprises an image source 89 that is also connected to the control means 87.

The micromirrors of the exemplary embodiment of the autostereoscopic projection screen 83 are not arranged in subsets. All micromirrors are used in a correlated manner to generate two images at a viewing distance. The images are not created at the same time. Instead they are created in a rapidly alternating fashion such that a viewer at the viewing distance has the impression of seeing the images simultaneously.

Fig. 6a shows the generation or creation of a first image. The image source 89 emits light 91 illuminating the micromirrors 85. The control means 87 is adapted to tilt the micromirrors 85 such that the light is reflected into a first direction such that an image is created in a first viewing distance. The image can only be seen by a first eye 93 of viewer at the viewing distance. A second image is created by altering the orientation of the micromirrors 85 as shown in Fig. 6b. Light 91 emitted by the image source 89 is reflected into another or a second direction such that a second images is generated at the first viewing distance. The second image can only be seen by a second eye 95 of a viewer.

The control means 87 is adapted to alter the orientation of the micromirrors 85 in rapid succession such that the viewer has the impression of seeing different images with his eyes 93, 95 simultaneously. With the control means 87 also the image source 89 is controlled: the micromirrors 85 are only illuminated while not switching between two orientations, thereby avoiding any blurring of the images. Furthermore, the image projected onto the projection screen 83 by the image source 89 can be selected/controlled depending on the orientation of the micromirrors 85.

The micromirrors 85 comprised in the projection screen 83 can in an exemplary embodiment also be arranged in subsets and/or clusters to provide multiple viewers simultaneously with images. The images seen by each viewer may be the same at a given time. It is, however, also possible to provide different viewers with different images simultaneously such that the viewers can advantageously be provided with different content.

The embodiments of a projection screen 83 and a system 81 provide an advantageous solution for projecting autostereoscopic images in settings that are subject to vibrations or wherever an exact alignment of screen 83 and the image source 89 is hindered. Correlating the illumination of the micromirrors 85 as a function of their current orientation can be easily achieved by a coupling of the image source 89 with the control means 87. The coupling can be performed by electronic means and is therefore advantageously independent of any physical stress acting on either the image source 89 or the projection screen 83.

## Claims

1. An autostereoscopic projection screen (1, 61, 83) comprising a projection area and a control means (10, 75, 87),
wherein the projection area comprises micromirrors (3, 5, 29, 31, 41, 43, 51, 53, 55, 57, 71, 73, 85),
wherein the control means (10, 75, 87) is adapted to adjust the orientation of the micromirrors (3, 5, 29, 31, 41, 43, 51, 53, 55, 57, 71, 73, 85) such that the micromirrors (3, 5, 29, 31, 41, 43, 51, 53, 55, 57, 71, 73, 85) can reflect light (13, 21, 33, 37, 45, 47, 77, 79, 91) emitted by an image source (14, 67, 89) into a plurality of directions (15, 23, 35, 39) creating an image in each direction (15, 23, 35, 39) at a viewing distance such that each image can only be seen by one eye (17, 25, 93, 95) of a viewer located in said corresponding direction (15, 23, 35, 39) at said viewing distance, and
wherein two of the images are created at a first viewing distance and spaced apart such that a viewer in the first viewing distance can see one of the two images with a first eye (17, 93) only and the other of the two images with a second eye (25, 95) only, wherein the viewer has the impression of seeing the two images simultaneously.

2. An autostereoscopic projection screen according to claim 1, wherein the control means is adapted to adjust the orientation of the micromirrors (51, 53, 55, 57) such that a plurality of images is created at the first viewing distance,
wherein for each first image created at the first viewing distance a corresponding second image is created at the first viewing distance such that a viewer at the first viewing distance can see the first image with a first eye only and the second image with a second eye only, wherein the viewer has the impression of seeing the two images simultaneously.

3. An autostereoscopic projection screen according to claim 1 or 2, wherein the control means is adapted to adjust the orientation of the micromirrors (51, 53, 55, 57) such that two images are created at a second viewing distance and spaced apart such that a viewer in the second viewing distance can see one of the images with a first eye only and the other of the two images with a second eye only, wherein the viewer has the impression of seeing the two images simultaneously.

4. An autostereoscopic projection screen (1, 61, 83) according to any of the preceding claims, wherein the micromirrors (3, 5, 29, 31, 41, 43, 51, 53, 55, 57, 71, 73, 85) are arranged on a rectilinear grid, such that each micromirror (3, 5, 29, 31, 41, 43, 51, 53, 55, 57, 71, 73, 85) can be identified by a row number and a column number.

5. An autostereoscopic projection screen (1, 61) according to any of the preceding claims, wherein the micromirrors (3, 5, 29, 31, 41, 43, 51, 53, 55, 57, 71, 73) are arranged in a plurality of subsets and
wherein each of the plurality of images is created by one subset (7, 9) of micromirrors (3, 5, 29, 31, 41, 43, 51, 53, 55, 57, 71, 73).

6. An autostereoscopic projection screen (61) according to claim 5, wherein a plurality of the micromirrors (41, 43, 51, 53, 55, 57) is arranged in clusters (41, 43, 51, 53, 55, 57), each cluster comprising at least two micromirrors (41, 43, 51, 53, 55, 57),
wherein all micromirrors (41, 43, 51, 53, 55, 57) in a cluster (41, 43, 51, 53, 55, 57) belong to the same subset and
wherein for each micromirror (41, 43, 51, 53, 55, 57) in a cluster (41, 43, 51, 53, 55, 57) there is another micromirror (41, 43, 51, 53, 55, 57) in the same cluster (41, 43, 51, 53, 55, 57) that can be identified by an adjacent row number and the same column number or by an adjacent column number and the same row number.

7. An autostereoscopic projection screen (61) according to claim 6, wherein all micromirrors (41, 43, 51, 53, 55, 57) that can be identified by the same column number are arranged in the same cluster (41, 43, 51, 53, 55, 57).

8. An autostereoscopic projection screen (1, 61) according to any of claims 4 to 7, wherein all of the images of the plurality of images are created simultaneously.

9. An autostereoscopic projection screen (83) according to any of claims 1 to 7, wherein the control means (87) is adapted to alter the orientation of the micromirrors (85) in rapid succession such that the two images, that are created at the first viewing distance and spaced apart such that a viewer in the first viewing distance can see one of the images with a first eye (93) and a second of the two images with a second eye (95) only, wherein the viewer has the impression of seeing the two images simultaneously, are not created simultaneously.

10. An autostereoscopic projection screen (83) according to claim 9, wherein the control means (87) is adapted to alter the orientation of the micromirrors (85) in rapid succession such that more than two images are created at the first viewing distance,
wherein for each first image created at the first viewing distance a corresponding second image is created at the first viewing distance such that a viewer at the first viewing distance can see the first image with a first eye (93) only and the second image with a second eye (95) only, wherein the viewer has the impression of seeing the two images simultaneously, and
wherein each first image and the corresponding second image are not created simultaneously.

11. An autostereoscopic projection screen (83) according to claim 9 or 10, wherein the light (91) emitted by an image source (89) is only reflected into one of the plurality of directions at a time.

12. A method for autostereoscopic projection comprising the following steps:
- providing an autostereoscopic projection screen (1, 61, 83) according to any of claims 1 to 11,
- providing an image source (14, 67, 89),
- emitting light (13, 21, 33, 37, 45, 47, 77, 79, 91) using the image source (14, 67, 89) to illuminate the micromirrors (3, 5, 29, 31, 41, 43, 51, 53, 55, 57, 71, 73, 85) and
- using the control means (10, 75, 87) to adjust the orientation of the micromirrors (3, 5, 29, 31, 41, 43, 51, 53, 55, 57, 71, 73, 85), such that the light (13, 21, 33, 37, 45, 47, 77, 79, 91) emitted by the image source (14, 67, 89) is reflected into a plurality of directions (15, 23, 35, 39) creating an image in each direction (15, 23, 35, 39) at a viewing distance, such that each image can only be seen by one eye (17, 25, 93, 95) of a viewer in said corresponding direction (15, 23, 35, 39) at said viewing distance,
wherein two of the images are created at a first viewing distance and spaced apart such that a viewer in the first viewing distance can see one of the two images with a first eye (17, 93) only and the other of the two images with a second eye (25, 95) only, wherein the viewer has the impression of seeing the two images simultaneously.

13. A method for autostereoscopic projection according to claim 12, provided that an autostereoscopic projection screen (83) according to any of claims 9 to 11 is provided, wherein the step of using the control means (87) to adjust the orientation of the micromirrors (85) comprises the repeated steps of
- using the control means (87) to alter the orientation of the micromirrors (85) such that light (91) emitted by the image source (89) is reflected into a first direction, thereby creating a first image of the two images at the first viewing distance and
- using the control means (87) to alter the orientation of the micromirrors (85) such that light (91) emitted by the image source (89) is reflected into a second direction, thereby creating a second image of the two images at the first viewing distance.

14. A system (59, 81) for autostereoscopic projection comprising an autostereoscopic projection screen (1, 69, 83) according to any of claims 1 to 11 and an image source (14, 67, 89) for emitting light (13, 21, 33, 37, 45, 47, 77, 79, 91) to illuminate the micromirrors (3, 5, 29, 31, 41, 43, 51, 53, 55, 57, 71, 73, 85).

15. A system according to claim 14, provided that the system comprises an autostereoscopic projection screen (83) according to any of claims 9 to 11, wherein the image source (89) is adapted to illuminate micromirrors (85) only when the orientation of the micromirrors (85) is not altered.

## Patentansprüche

1. Autostereoskopischer Projektionsbildschirm (1, 61, 83) umfassend eine Projektionsfläche und ein Steuermittel (10, 75, 87),
wobei die Projektionsfläche Mikrospiegel (3, 5, 29, 31, 41, 43, 51, 53, 55, 57, 71, 73, 85) umfasst,
wobei das Steuermittel (10, 75, 87) angepasst ist, um die Ausrichtung der Mikrospiegel (3, 5, 29, 31, 43, 51, 53, 55, 57, 71, 73, 85) einzustellen, sodass die Mikrospiegel (3, 5, 29, 31, 41, 43, 51, 53, 55, 57, 71, 73, 85) Licht (13, 21, 33, 37, 45, 47, 77, 79, 91), das durch eine Bildquelle (14, 67, 89) in eine Vielzahl von Richtungen (15, 23, 35, 39) zur Erzeugung eines Bildes in jeder Richtung (15, 23, 35, 39) in einem Sichtabstand emittiert wird, reflektieren können, sodass jedes Bild nur von einem Auge (17, 25, 93, 95) eines Betrachters, der sich in der entsprechenden Richtung (15, 23, 35, 39) in dem Sichtabstand befindet, gesehen werden kann, und
wobei zwei der Bilder in einem ersten Sichtabstand erzeugt werden und voneinander beabstandet sind, sodass ein Betrachter in dem ersten Sichtabstand eines der beiden Bilder nur mit einem ersten Auge (17, 93) und das andere der beiden Bilder nur mit einem zweiten Auge (25, 95) sehen kann, wobei der Betrachter den Eindruck hat, zwei Bilder gleichzeitig zu sehen.

2. Autostereoskopischer Projektionsbildschirm nach Anspruch 1, wobei das Steuermittel angepasst ist, um die Ausrichtung der Mikrospiegel (51, 53, 55, 57) einzustellen, sodass eine Vielzahl von Bildern in dem ersten Sichtabstand erzeugt wird,
wobei für jedes erste, in dem ersten Sichtabstand, erzeugte Bild ein entsprechendes zweites Bild in dem ersten Sichtabstand erzeugt wird, sodass ein Betrachter in dem ersten Sichtabstand das erste Bild nur mit einem ersten Auge und das zweite Bild nur mit einem zweiten Auge sehen kann, wobei der Betrachter den Eindruck hat, zwei Bilder gleichzeitig zu sehen.

3. Autostereoskopischer Projektionsbildschirm nach Anspruch 1 oder 2, wobei das Steuermittel angepasst ist, um die Ausrichtung der Mikrospiegel (51, 53, 55, 57) einzustellen, sodass zwei Bilder in einem zweiten Sichtabstand erzeugt werden und voneinander beabstandet sind, sodass ein Betrachter in dem zweiten Sichtabstand eines der Bilder nur mit einem ersten Auge und das andere der beiden Bilder nur mit einem zweiten Auge sehen kann, wobei der Betrachter den Eindruck hat, zwei Bilder gleichzeitig zu sehen.

4. Autostereoskopischer Projektionsbildschirm (1, 61, 83) nach einem der vorherigen Ansprüche, wobei die Mikrospiegel (3, 5, 29, 31, 41, 43, 51, 53, 55, 57, 71, 73, 85) auf einem geradlinigen Gitter angeordnet sind, sodass jeder Mikrospiegel (3, 5, 29, 31, 41, 43, 51, 53, 55, 57, 71, 73, 85) durch eine Reihenzahl und eine Spaltenzahl identifiziert werden kann.

5. Autostereoskopischer Projektionsbildschirm (1, 61) nach einem der vorherigen Ansprüche, wobei die Mikrospiegel (3, 5, 29, 31, 41, 43, 51, 53, 55, 57, 71, 73) in einer Vielzahl an Untermengen angeordnet sind und
wobei jedes der Vielzahl an Bildern von einer Untermenge (7, 9) an Mikrospiegeln (3, 5, 29, 31, 41, 43, 51, 53, 55, 57, 71, 73) erzeugt wird.

6. Autostereoskopischer Projektionsbildschirm (61) nach Anspruch 5, wobei eine Vielzahl an Mikrospiegeln (41, 43, 51, 53, 55, 57) in Clustern (41, 43, 51, 53, 55, 57) angeordnet ist, wobei jeder Cluster wenigstens zwei Mikrospiegel (41, 43, 51, 53, 55, 57) umfasst,
wobei alle Mikrospiegel (41, 43, 51, 53, 55, 57) in einem Cluster (41, 43, 51, 53, 55, 57) zu derselben Untermenge gehören, und
wobei es für jeden Mikrospiegel (41, 43, 51, 53, 55, 57) in einem Cluster (41, 43, 51, 53, 55, 57) einen weiteren Mikrospiegel (41, 43, 51, 53, 55, 57) in demselben Cluster (41, 43, 51, 53, 55, 57) gibt, der durch eine angrenzende Reihenzahl und dieselbe Spaltenzahl oder durch eine angrenzende Spaltenzahl und dieselbe Reihenzahl identifiziert werden kann.

7. Autostereoskopischer Projektionsbildschirm (61) nach Anspruch 6, wobei alle Mikrospiegel (41, 43, 51, 53, 55, 57), die durch dieselbe Spaltenzahl identifiziert werden können, in demselben Cluster (41, 43, 51, 53, 55, 57) angeordnet sind.

8. Autostereoskopischer Projektionsbildschirm (1, 61) nach einem der Ansprüche 4 bis 7, wobei alle der Bilder von der Vielzahl an Bildern gleichzeitig erzeugt werden.

9. Autostereoskopischer Projektionsbildschirm (83) nach einem der Ansprüche 1 bis 7, wobei das Steuermittel (87) angepasst ist, um die Ausrichtung der Mikrospiegel (85) in einer schnellen Abfolge zu verändern, sodass die zwei Bilder, die in einem ersten Sichtabstand erzeugt werden und voneinander beabstandet sind, sodass ein Betrachter in dem ersten Sichtabstand eines der Bilder mit einem ersten Auge (93) und ein zweites der beiden Bilder nur mit einem zweiten Auge (95) sehen kann, wobei der Betrachter den Eindruck hat, zwei Bilder gleichzeitig zu sehen, nicht gleichzeitig erzeugt werden.

10. Autostereoskopischer Projektionsbildschirm (83) nach Anspruch 9, wobei das Steuermittel (87) angepasst ist, um die Ausrichtung der Mikrospiegel (85) in einer schnellen Abfolge zu verändern, sodass mehr als zwei Bilder in dem ersten Sichtabstand erzeugt werden,
wobei für jedes erste, in dem ersten Sichtabstand, erzeugte Bild ein entsprechendes zweites Bild in dem ersten Sichtabstand erzeugt wird, sodass ein Betrachter in dem ersten Sichtabstand das erste Bild nur mit einem ersten Auge (93) und das zweite Bild nur mit einem zweiten Auge (95) sehen kann, wobei der Betrachter den Eindruck hat, die zwei Bilder gleichzeitig zu sehen, und
wobei jedes erste Bild und das entsprechende zweite Bild nicht gleichzeitig erzeugt werden.

11. Autostereoskopischer Projektionsbildschirm (83) nach Anspruch 9 oder 10, wobei das durch eine Bildquelle (89) emittierte Licht (91) jeweils nur in eine von einer Vielzahl von Richtungen reflektiert wird.

12. Verfahren zur autostereoskopischen Projektion umfassend die folgenden Schritte:
- Bereitstellen eines autostereoskopischen Projektionsbildschirms (1, 61, 83) nach einem der Ansprüche 1 bis 11,
- Bereitstellen einer Bildquelle (14, 67, 89),
- Emission von Licht (13, 21, 33, 37, 45, 47, 77, 79, 91) unter Verwendung der Bildquelle (14, 67, 89), um die Mikrospiegel (3, 5, 29, 31, 41, 43, 51, 53, 55, 57, 71 73, 85) zu beleuchten, und
- Verwenden der Steuermittel (10, 75, 87), um die Ausrichtung der Mikrospiegel (3, 5, 29, 31, 41, 43, 51, 53, 55, 57, 71 73, 85) einzustellen, sodass das durch die Bildquelle (14, 67, 89) emittierte Licht (13, 21, 33, 37, 45, 47, 77, 79, 91) in eine Vielzahl von Richtungen (15, 23, 35, 39) zur Erzeugung eines Bildes in jeder Richtung (15, 23, 35, 39) in einem Sichtabstand reflektiert wird, sodass jedes Bild nur von einem Auge (17, 25, 93, 95) eines Betrachters in der entsprechenden Richtung (15, 23, 35, 39) in dem Sichtabstand gesehen werden kann,
wobei zwei der Bilder in einem ersten Sichtabstand erzeugt werden und voneinander beabstandet sind, sodass ein Betrachter in dem ersten Sichtabstand eines der zwei Bilder nur mit einem ersten Auge (17, 93) und das andere der zwei Bilder nur mit einem zweiten Auge (25, 95) sehen kann, wobei der Betrachter den Eindruck hat, zwei Bilder gleichzeitig zu sehen.

13. Verfahren zur autostereoskopischen Projektion nach Anspruch 12, vorausgesetzt, dass ein autostereoskopischer Projektionsbildschirm (83) nach einem der Ansprüche 9 bis 11 bereitgestellt wird, wobei der Schritt des Verwendens des Steuermittels (87), um die Ausrichtung der Mikrospiegel (85) einzustellen, die wiederholten Schritte umfasst:
- Verwenden des Steuermittels (87), um die Ausrichtung der Mikrospiegel (85) zu verändern, sodass das von der Bildquelle (89) emittierte Licht (91) in eine erste Richtung reflektiert wird, wobei dabei ein erstes Bild von den beiden Bildern in dem ersten Bildabstand erzeugt wird, und
- Verwenden des Steuermittels (87), um die Ausrichtung der Mikrospiegel (85) zu verändern, sodass das von der Bildquelle (89) emittierte Licht (91) in eine zweite Richtung reflektiert wird, wobei dabei ein zweites Bild von den beiden Bildern in dem ersten Bildabstand erzeugt wird.

14. System (59, 81) zur autostereoskopischen Projektion umfassend einen autostereoskopischen Projektionsbildschirm (1, 69, 83) nach einem der Ansprüche 1 bis 11 und eine Bildquelle (14, 67, 89) zur Emission von Licht (13, 21, 33, 37, 45, 47, 77, 79, 91), um die Mikrospiegel (3, 5, 29, 31, 41, 43, 51, 53, 55, 57, 71 73, 85) zu beleuchten.

15. System nach Anspruch 14, vorausgesetzt, dass das System einen autostereoskopischen Projektionsbildschirm (83) nach einem der Ansprüche 9 bis 11 umfasst, wobei die Bildquelle (89) angepasst ist, um die Mikrospiegel (85) nur wenn die Ausrichtung der Mikrospiegel (85) nicht geändert wird, zu beleuchten.

## Revendications

1. Ecran de projection autostéréoscopique (1, 61, 83) comprenant une zone de projection et un moyen de contrôle (10, 75, 87),
la zone de projection comprenant des micromiroirs (3, 5, 29, 31, 41, 43, 51, 53, 55, 57, 71, 73, 85),
le moyen de contrôle (10, 75, 87) étant adapté pour ajuster l'orientation des micromiroirs (3, 5, 29, 31, 41, 43, 51, 53, 55, 57, 71, 73, 85) de telle manière que les micromiroirs (3, 5, 29, 31, 41, 43, 51, 53, 55, 57, 71, 73, 85) puissent réfléchir de la lumière (13, 21, 33, 37, 45, 47, 77, 79, 91) émise par une source d'image (14, 67, 89) dans une pluralité de directions (15, 23, 35, 39) en créant une image dans chaque direction (15, 23, 35, 39) à une distance de vision telle que chaque image peut être vue seulement par un oeil (17, 25, 93, 95) d'un visionneur situé dans ladite direction correspondante (15, 23, 35, 39) à ladite distance de vision et
deux des images étant créées à une première distance de vision et étant espacées de telle manière qu'un visionneur à la première distance de vision peut voir l'une des deux images seulement avec un premier oeil (17, 93) et l'autre des deux images seulement avec un second oeil (25, 95), le visionneur ayant l'impression de voir les deux images simultanément.

2. Ecran de projection autostéréoscopique selon la revendication 1, le moyen de contrôle étant adapté pour ajuster l'orientation des micromiroirs (51, 53, 55, 57) de telle manière qu'une pluralité d'images est créée à la première distance de vision,
cependant que, pour chaque première image créée à la première distance de vision, une seconde image correspondante est créée à la première distance de vision de telle manière qu'un visionneur à la première distance de vision peut voir la première image seulement avec un premier oeil et la seconde image seulement avec un second oeil, le visionneur ayant l'impression de voir les deux images simultanément.

3. Ecran de projection autostéréoscopique selon la revendication 1 ou 2, le moyen de contrôle étant adapté pour ajuster l'orientation des micromiroirs (51, 53, 55, 57) de telle manière que deux images sont créées à une seconde distance de vision et étant espacées de telle manière qu'un visionneur à la seconde distance de vision peut voir l'une des images seulement avec un premier oeil et l'autre des deux images seulement avec un second oeil, le visionneur ayant l'impression de voir les deux images simultanément.

4. Ecran de projection autostéréoscopique (1, 61, 83) selon l'une quelconque des revendications précédentes, les micromiroirs (3, 5, 29, 31, 41, 43, 51, 53, 55, 57, 71, 73, 85) étant arrangés sur une grille rectiligne de telle manière que chaque micromiroir (3, 5, 29, 31, 41, 43, 51, 53, 55, 57, 71, 73, 85) puisse être identifié par un numéro de rangée et un numéro de colonne.

5. Ecran de projection autostéréoscopique (1, 61) selon l'une quelconque des revendications précédentes, les micromiroirs (3, 5, 29, 31, 41, 43, 51, 53, 55, 57, 71, 73) étant arrangés en une pluralité de sous-ensembles et
chaque image de la pluralité d'image étant créée par un sous-ensemble (7, 9) de micromiroirs (3, 5, 29, 31, 41, 43, 51, 53, 55, 57, 71, 73).

6. Ecran de projection autostéréoscopique (61) selon la revendication 5, une pluralité de micromiroirs (41, 43, 51, 53, 55, 57) étant arrangée en groupes (41, 43, 51, 53, 55, 57), chaque groupe comprenant au moins deux micromiroirs (41, 43, 51, 53, 55, 57),
tous les micromiroirs (41, 43, 51, 53, 55, 57) dans un groupe (41, 43, 51, 53, 55, 57) appartenant au même sous-ensemble et
cependant que pour chaque micromiroir (41, 43, 51, 53, 55, 57) dans un groupe (41, 43, 51, 53, 55, 57) il y a un autre micromiroir (41, 43, 51, 53, 55, 57) dans le même groupe (41, 43, 51, 53, 55, 57) qui peut être identifié par un numéro de rangée adjacente et le même numéro de colonne ou par un numéro de colonne adjacente et le même numéro de rangée.

7. Ecran de projection autostéréoscopique (61) selon la revendication 6, tous les micromiroirs (41, 43, 51, 53, 55, 57) qui peuvent être identifiés par le même numéro de colonne étant arrangés dans le même groupe (41, 43, 51, 53, 55, 57).

8. Ecran de projection autostéréoscopique (1, 61) selon l'une quelconque des revendications précédentes 4 à 7, toutes les images de la pluralité d'images étant créées simultanément.

9. Ecran de projection autostéréoscopique (83) selon l'une quelconque des revendications précédentes 1 à 7, le moyen de contrôle (87) étant adapté pour modifier l'orientation des micromiroirs (85) en succession rapide de telle manière que les deux images qui sont créées à la première distance de vision et espacées de telle manière qu'un visionneur à la première distance de vision peut voir l'une des images seulement avec un premier oeil (93) et une seconde image des deux images seulement avec un second oeil (95), cependant que le visionneur a l'impression de voir les deux images simultanément qui ne sont pas créées simultanément.

10. Ecran de projection autostéréoscopique (83) selon la revendication 9, le moyen de contrôle (87) étant adapté pour modifier l'orientation des micromiroirs (85) en succession rapide de telle manière que plus de deux images sont créées à la première distance de vision,
cependant que, pour chaque première image créée à la première distance de vision, une seconde image correspondante est créée à la première distance de vision de telle manière qu'un visionneur à la première distance de vision peut voir la première image seulement avec un premier oeil (93) et la seconde image seulement avec un second oeil (95), le visionneur ayant l'impression de voir les deux images simultanément et
chaque première image et la seconde image correspondante n'étant pas créées simultanément.

11. Ecran de projection autostéréoscopique (83) selon la revendication 9 ou 10, la lumière (91) émise par une source d'image (89) étant seulement réfléchie dans l'une des directions de la pluralités de direction à la fois.

12. Procédé de projection autostéréoscopique comprenant les étapes suivantes :
- la fourniture d'un écran de projection autostéréoscpique (1,61, 83) selon l'une quelconque des revendications 1 à 11,
- la fourniture d'une source d'image (14, 67, 89),
- l'émission de lumière (13, 21, 33, 37, 45, 47, 77, 79, 91) en utilisant la source d'image (14, 67, 89) pour illuminer les micromiroirs (3, 5, 29, 31, 41, 43, 51, 53, 55, 57, 71, 73, 85) et
- l'utilisation du moyen de contrôle (10, 75, 87) pour ajuster l'orientation des micromiroirs (3, 5, 29, 31, 41, 43, 51, 53, 55, 57, 71, 73, 85) de telle manière que la lumière (13, 21, 33, 37, 45, 47, 77, 79, 91) émise par la source d'image (14, 67, 89) est réfléchie dans une pluralité de directions (15, 23, 35, 39) en créant une image dans chaque direction (15, 23, 35, 39) à une distance de vision telle que chaque image peut être vue seulement par un oeil (17, 25, 93, 95) d'un visionneur situé dans ladite direction correspondante (15, 23, 35, 39) à ladite distance de vision,
deux des images étant créées à une première distance de vision et étant espacées de telle manière qu'un visionneur à la première distance de vision peut voir l'une des deux images seulement avec un premier oeil (17, 93) et l'autre des deux images seulement avec un second oeil (25, 95), le visionneur ayant l'impression de voir les deux images simultanément.

13. Procédé de projection autostéréoscopique selon la revendication 12 à condition qu'un écran de projection autostéréoscopique (83) selon l'une quelconque des revendications 9 à 11 soit fourni, l'étape d'utilisation du moyen de contrôle (87) pour ajuster l'orientation des micromiroirs (85) comprenant les étapes répétées :
- d'utilisation du moyen de contrôle (87) pour modifier l'orientation des micromiroirs (85) de telle manière que la lumière (91) émise par la source d'image (89) est réfléchie dans une première direction en créant ainsi une première image des deux images à la première distance de vision et
- d'utilisation du moyen de contrôle (87) pour modifier l'orientation des micromiroirs (85) de telle manière que la lumière (91) émise par la source d'image (89) est réfléchie dans une seconde direction en créant ainsi une seconde image des deux images à la première distance de vision.

14. Système (59, 81) pour la projection autostéréoscopique comprenant un écran de projection autostéréoscopique (1, 69, 83) selon l'une quelconque des revendications 1 à 11 et une source d'image (14, 67, 89) pour émettre de la lumière (13, 21, 33, 37, 45, 47, 77, 79, 91) pour illuminer les micromiroirs (3, 5, 29, 31, 41, 43, 51, 53, 55, 57, 71, 73, 85).

15. Système selon la revendication 14 à condition que le système comprenne un écran de projection autostéréoscopique (83) selon l'une quelconque des revendications 9 à 11, la source d'image (89) étant adaptée pour illuminer des micromiroirs (85) seulement lorsque l'orientation des micromiroirs (85) n'est pas modifiée.
